# EUROPÄISCHE PATENTSCHRIFT

(11) **EP 0 421 084 B1**
(45) Veröffentlichungstag und Bekanntmachung des Hinweises auf die Patenterteilung: **23.11.1994**
(21) Anmeldenummer: 90115035.9
(22) Anmeldetag: 04.08.1990
(51) Int. Cl.: B22F 3/10

(54) **Verfahren zur pulvermetallurgischen Herstellung eines Werkstücks**
Method for making components by powder metallurgy
Procédé d'obtention d'une pièce par métallurgie des poudres

(30) Priorität: 13.09.1989 CH 3343/89
(43) Veröffentlichungstag der Anmeldung: 10.04.1991
(73) Patentinhaber: ASEA BROWN BOVERI AG, 5400 Baden (CH)
(72) Erfinder: Jongenburger, Peter, Dr., NL-6836 DB Arnhem (NL); Tönnes, Christoph, CH-5430 Wettingen (CH); Verpoort, Clemens, Dr., CH-5442 Fislisbach (CH)

(56) Entgegenhaltungen:
- EP-A- 0 246 162
- WO-A-87/00781
- DE-A- 2 703 483
- GB-A- 2 088 414

## Beschreibung

### TECHNISCHES GEBIET

Die Erfindung betrifft ein Verfahren zur Herstellung eines Werkstücks aus einem pulverförmigen Werkstoff gemäss dem einleitenden Teil von Patentanspruch 1.

### STAND DER TECHNIK

Ein Verfahren der eingangs genannten Art ist in WO-A-8700781 beschrieben. Bei diesem Verfahren werden 40 bis 80 Volumenprozent eines pulvermetallurgisches Ausgangsmaterials, etwa eines globularen Pulvers einer Nickel-Basislegierung, mit 20 bis 60 Volumenprozent eines Bindemittels, etwa Wachs oder Thermoplast, innig miteinander gemischt. Die so gebildete Masse wird in einer Spritzgussmaschine oder in einer Trockenpresse zu einem Formkörper mit einer einem herzustellenden Werkstück angepassten Kontur vorgeformt. Aus den Formkörper wird durch Ausheizen zunächst das Bindemittel entfernt. Sodann wird der Förmkörper in einem zweistufigen Sinterprozess drucklos zum Werkstück gesintert. Ein erster Schritt des Sinterprozesses umfasst ein 0,1 bis 10-stündiges Vorsintern bei 50 bis 70% der absoluten Solidustemperatur des Ausgangsmaterials im Vakuum oder im Schutzgas. Der so vorgesinterte Formkörper weist praktisch keine Schwindung auf und wird vor Ausführung eines zweiten Schrittes des Sinterprozesses freihängend befestigt. Im zweiten Schritt des Sinterprozesses wird der vorgesinterte Formkörper bei 80 bis 98% der absoluten Solidustemperatur des Ausgangsmaterials sodann zu einem Werkstück hoher Dichte fertiggesintert.

Einer erfolgversprechenden Durchführung dieses Verfahrens sind durch die Verwendung von Bindemitteln jedoch Grenzen gesetzt. Je nach Qualität und Wahl der Ausgangsmaterialien und der Bindemittel sowie der angestrebten Form des Werkstückes können zahlreiche Schwierigkeiten auftreten:
Beim Mischen von Pulver mit Binder und Lösungsmittel können sich Blasen bilden. Die Wandstärke der Werkstücke ist begrenzt, da Binder und Lösungsmittel bei zu grossen Wandstärken nicht mehr vollständig aus dem zu sinternden Material entfernt werden können. Durch Binder- und Lösungsmittelrückstände (z.B. Kohlenstoff), die auch nach dem Ausheizen von Binder und Lösungsmittel im Formkörper verbleiben, kann dessen Zusammensetzung unkontrolliert beeinträchtigt werden. Beim Übergang auf eine andere Formgebung und einen anderen Werkstoff muss für das herzustellende Werkstück ein neues Binder-Lösungsmittel-System entwickelt werden.

Zum Stand der Technik werden noch die nachfolgend angegebenen Druckschriften zitiert:
- GB Pat.Appl. 2088414,
- EP Pat.Appl. 0191409,
- R. Billet, "PLASTIC METALS: From Fiction to Reality with Injection Molded P/M Materials", Parmatech Corporation, San Rafael, California, P/M-82 in Europe Int.PM-Conf. Florence I 1982,
- E. Lange und M. Poniatowski, "Pulvermettalurgisches Spritzgiessen - ein neues Formgebungsverfahren für Sinterteile komplizierter Gestalt", Konstruktion 40 (1988) 233-238,
- Göran Sjöberg, "Powder Casting and Metal Injection Moulding", Manuscript submitted to Metal Powder Report September 1987.

### DARSTELLUNG DER ERFINDUNG

Der Erfindung, wie sie in Patentanspruch 1 angegeben ist, liegt die Aufgabe zugrunde, ein Verfahren anzugeben, mit welchem aus einem pulverförmigen Ausgangsmaterial ein vergleichsweise kompliziert geformtes Werkstück beliebigen Querschnitts und unbegrenzter Wandstärke sowie mit reproduzierbaren Eigenschaften gefertigt werden kann.

Mit dem Verfahren nach der Erfindung wird in einfacher und wirtschaftlicher Weise ein Fertigerzeugnis mit reproduzierbaren Eigenschaften geliefern, das höchstens geringfügig zusätzlich bearbeitet werden muss. Da als Ausgangsmaterial lediglich ein mechanisch vorverdichtetes Pulver dient, wird bei der Durchführung des Verfahrens die Bildung von Blasen bzw. von groben Poren sowie von unerwünschten schädlichen Rückständen selbst bei der Herstellung sehr grosser Werkstücke mit grosser Sicherheit vermieden. Zudem gewährleistet das Verfahren nach der Erfindung bezüglich Auswahl der Form und der Zusammensetzung des herzustellenden Werkstücks grösstmögliche Freizügigkeit und Universalität.

### WEG ZUR AUSFÜHRUNG DER ERFINDUNG

Die Erfindung wird anhand der durch Figuren näher erläuterten Ausführungsbeispiele beschrieben.

Dabei zeigt:
- Fig.1: ein Blockdiagramm des Verfahrens nach der Erfindung,
- Fig.2: eine Aufsicht auf einen Schnitt durch ein schematisiert dargestelltes Haufwerk loser Pulverpartikel einer im Verfahren gemäss Fig.1 verwendeten Pulvermischung,
- Fig.3: eine Aufsicht auf einen Schnitt durch eine schematisiert dargestellte Agglomeration leicht verdichteter Pulverpartikel nach dem Einfüllen in eine im Verfahren gemäss Fig. 1 verwendete Form,
- Fig.4: einen schematischen Schnitt durch einen vorgesinterten Formling und Pulverpartikel nach dem Vorsintern,
- Fig.5: einen schematischen Schnitt durch einen Sinterkörper und Pulverpartikel nach dem Fertigsintern.
- Fig.6: einen schematischen Schnitt durch ein fertiges dichtes, formgetreues Werkstück und Pulverpartikel nach dem heiss-isostatischen Pressen.

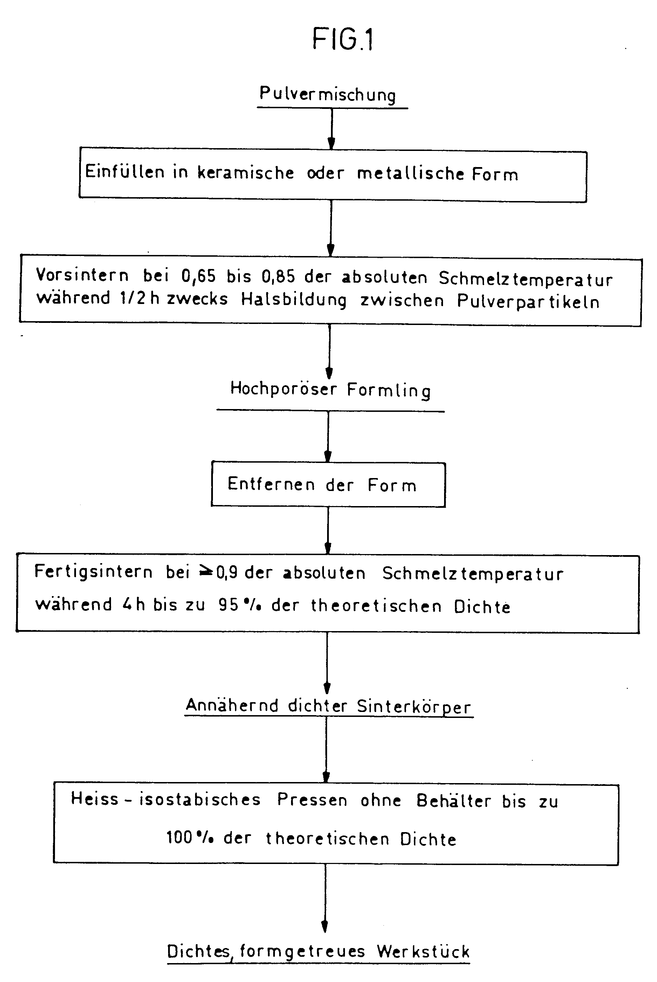

In Fig.1 ist ein Fliessbild (Blockdiagramm) des Verfahrens in allgemeinster Art dargestellt. Aus diesem Bild ist die stufenweise Verdichtung des Pulvers durch Einfüllen in Form, Vorsintern, Fertigsintern und heiss-isostatisches Pressen deutlich erkennbar. Das Diagramm bedarf keiner weiteren Erklärungen.

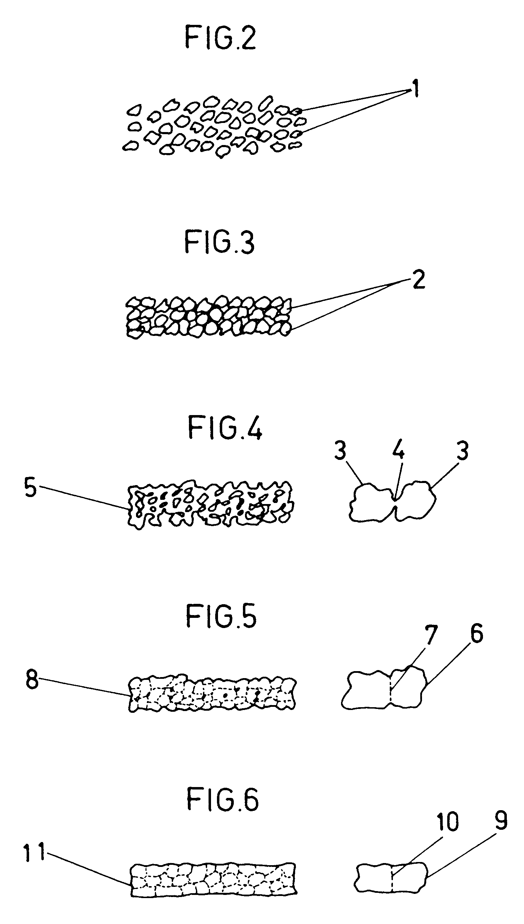

Fig.2 bezieht sich auf einen schematischen Schnitt durch ein Haufwerk loser Pulverpartikel im Ausgangszustand. 1 stellt lose Pulverpartikel im Anlieferungszustand vor dem Einfüllen in die Form dar. Die Pulverpartikel 1 sind so gezeichnet, dass sie sich praktisch nicht berühren, um diesen Zustand der geringen Schüttdichte von den nachfolgenden suksessiver Verdichtung abzuheben.

Fig.3 zeigt einen schematischen Schnitt durch eine Agglomeration leicht verdichteter Pulverpartikel nach dem Einfüllen in die Form. 2 stellen durch Klopfen, Rütteln oder Vibrieren der Form leicht verdichtete Pulverpartikel nach dem Einfüllen in die Form dar. Die Pulverpartikel 2 berühren sich punktweise.

In Fig.4 ist ein schematischer Schnitt durch einen vorgesinterten Formling sowie Pulverpartikel nach dem Vorsintern dargestellt. 3 sind zwei benachbarte Pulverpartikel nach dem Vorsintern. Durch diese Wärmebehandlung bildet sich an der Berührungsstelle dank gegenseitiger Diffusion eine Brücke, Hals 4 genannt. Es handelt sich um eine echte metallurgische Bindung (im Falle von Metallpartikeln). 5 ist der gebildete gerüstartige vorgesintere Formling bestehend aus punktweise über besagte Hälse verbundenen Pulverpartikeln.

Fig.5 bezieht sich auf einen schematischen Schnitt durch einen Sinterkörper und Pulverpartikel nach dem Fertigsintern. 6 stellen zwei benachbarte Pulverpartikel nach dem Fertigsintern dar, die annähernd vollständig durch Diffusion verschweisst sind. Die ehemalige Berührungszone 7 der benachbarten Pulverpartikel nach dem vollständigen Zusammensintern ist durch eine gestrichelte Linie angedeutet. 8 ist der gebildete Sinterkörper mit geringer Porosität.

Fig.6 zeigt einen schematischen Schnitt durch ein fertiges dichtes formgetreues Werkstück und Pulverpartikel nach dem heiss-isostatischen Pressen. 9 stellen zwei benachbarte Pulverpartikel nach dem heiss-isostatischen Pressen dar. Die Partikel sind vollständig durch Diffusion unter allseitigem Druck verschweisst. 10 ist die ehemalige Korngrenze der benachbarten Pulverpartikel nach vollständiger Verdichtung durch heiss-isostatisches Pressen. Als Endprodukt liegt ein fertiges und formgetreues Werkstück 11 nach dem heiss-isostatischen Pressen vor.

### Ausführungsbeispiel 1:

Als Werkstück wurde eine Schaufel für eine rotierende thermische Maschine, in vorliegendem Fall für einen Axialverdichter, hergestellt. Die Schaufel mit Tragflügelquerschnitt hatte die folgende Endabmessungen:

| | |
|---|---|
| Länge | = 12o mm |
| Breite | = 26 mm |
| grösste Dicke | = 3,5 mm |
| Profilhöhe | = 7 mm |

Als Werkstoff wurde ein Cr-Stahl mit der deutschen Bezeichnung nach DIN X20CrMoV 12 1 mit der nachfolgenden Zusammensetzung gewählt:

| | |
|---|---|
| Cr | = 12 Gew.-% |
| Mo | = 1 Gew.-% |
| V | = 0,3 Gew.-% |
| C | = 0,20 Gew.-% |
| Fe | = Rest |

Zur Herstellung der Schaufel wurde von einem durch Gasstrahlzerstäubung erzeugten Pulver mit einer maximalen Partikelgrösse von 50 µm ausgegangen. Das Pulver wurde trocken, ohne jeglichen Binder in eine in den Innenabmessungen um ca. 10 % linear vergrösserte keramische Form aus Al₂O₃ eingefüllt und durch 50-maliges Klopfen kalt vorverdichtet. Es wurde auf diese Weise eine Klopfdichte von ca. 64 % der vollen Dichte erreicht. Das Einschüttende der keramischen Form wurde mit Stahlwatte verstopft und dann mit einem Draht befestigt, um ein nachträgliches Austreten des Pulvers anlässlich der Prozesshandhabung zu vermeiden. Dann wurde die gefüllte Form evakuiert, wozu ein mit Argon gefluteterVakuumofen verwendet wurde. Die Atmosphäre des Vorsinterns war demzufolge Argon mit einem Restdruck von 5 m bar.

Nun wurde das Ganze zwecks Vorsintern des Pulvers bei einer Temperatur von 1100 °C während 1 h geglüht. Dabei wurde durch Halsbildung zwischen benachbarten Pulverpartikeln ein gerüstartiger Formling gebildet, der nach der Abkühlung genügend Festigkeit hatte, um die Keramikform zu entfernen. Diese war so geteilt, dass sie weiter verwendet werden konnte. Bei diesem Vorsinterprozess betrug die Schwindung praktisch gleich Null, sodass der Formling ohne Schwierigkeiten aus der Form genommen werden konnte. Dieser wurde nun ohne stützende Form frei auf einer Unterlage aufliegend im Vakuumofen bei einer Temperatur von 1350 °C während 4 h in Argonatmosphäre von 1 m bar Restdruck fertiggesintert. Dabei schwand er linear um ca. 10 %, was einer Volumenschwindung von ca. 27 % entsprach. Dabei wurde eine Dichte von 92 % des theoretischen Wertes erreicht.

### Ausführungsbeispiel 2:

Als Werkstück wurde eine Schaufel ähnlicher Abmessungen, wie unter Beispiel 1 angegeben, gefertigt. Der Werkstoff war X20CrMo V 12 1. Es wurde im wesentlichen gleich wie bei Beispiel 1 vorgegangen. Das Fertigsintern wurde bei einer Temperatur von 1380 °C während 2 h durchgeführt. Die erreichte Dichte betrug 94 % des theoretischen Wertes.

Das Werkstück wurde nun zusätzlich heiss-isostatisch nachgepresst, indem es ohne zuvor eingekapselt zu werden (behälterlos) in eine Warmpresse eingeführt und während 1/2 h einem allseitigen Druck von 2000 bar bei einer Temperatur von 1200 °C unterworfen wurde. Die dabei erreichte Dichte betrug 99 % des theoretischen Wertes.

### Ausführungsbeispiel 3:

Es wurde eine Turbinenschaufel mit Tragflügelprofil folgender Abmessungen hergestellt:

| | |
|---|---|
| Länge | = 160 mm |
| Breite | = 30 mm |
| grösste Dicke | = 5 mm |
| Profilhöhe | = 10 mm |

Als Werkstoff wurde ein Cr/Ni-Stahl mit der Bezeichnung AISI 316 mit folgender Zusammensetzung verwendet:

| | |
|---|---|
| Cr | = 17 Gew.-% |
| Mo | = 2,2 Gew.-% |
| Ni | = 12 Gew.-% |
| Mn | = 2 Gew.-% |
| Si | = 1 Gew.-% |
| C | = 0,08 Gew.-% |
| Fe | = Rest |

Das zur Verwendung gelangte Pulver war durch Gasstrahlzerstäubung erzeugt worden und hatte eine maximale Partikelgrösse von 30 µm. Das Einfüllen in die Form und das Vorverdichten des Pulvers erfolgte in analoger Weise wie bei Beispiel 1. Es wurde unter N₂/H₂-Atmosphäre bei 1000 °C während 1/2 h vorgesintert. Nach Entfernen der Form wurde unter einem Druck von 1 bar bei einer Temperatur von 1370 °C während 2 h unter einer Argonatmosphäre fertiggesintert.

Das Werkstück erreichte eine Dichte von 93 % des theoretischen Wertes.

### Ausführungsbeispiel 4:

Als Werkstück wurde eine Verdichterschaufel der gleichen Abmessungen und der gleichen Zusammensetzung (Stahl X20CrMoV 12 1) gefertigt. Das durch Gaszerstäubung hergestellte Ausgangspulver hatte eine Partikelgrösse von maximal 20 µm. Der Prozess des Vorsinterns wurde bei einer Temperatur von 900 °C während 1/2 h unter N₂-Atmosphäre durchgeführt. Nach Entfernen der Form wurde in der unter Beispiel 3 angegebenen Atmosphäre bei einer Temperatur von 1350 °C während 1 h unter einem Druck von 1 bar fertiggesintert.

Die vom Werkstück erreichte Dichte betrug 95 % des theoretischen Wertes.

Die Erfindung ist nicht auf die Ausführungsbeispiele beschränkt.

Das Verfahren zur pulvermetallurgischen Herstellung eines Werkstücks unter Heranziehung eines Sinterprozesses, wobei ein Pulver oder eine Pulvermischung zunächst in eine Form abgefüllt und mechanisch durch Klopfen, Rütteln oder Vibrieren vorverdichet wird, wird derart durchgeführt, dass das vorverdichtete Pulver in einer ersten Phase bei einer vergleichsweise niedrigen Temperatur, welche im Bereich von 0,65 bis 0,85 der absoluten Schmelztemperatur des für das Werkstück zu verwendenden Werkstoffs liegt, während 1/2 h bis 1 h auf eine Weise vorgesintert wird, dass die einzelnen Pulverpartikel lediglich an ihren Berührungspunkten durch Halsbildung ohne nennenswerte Schwindung miteinander verbunden werden und der auf diese Weise vorgesinterte Formling sorgfältig aus der Form entfernt oder die letztere zerstört wird und schliesslich der Formling in sich selbst freitragenden Zustand bei einer erhöhten Temperatur, welche bei mindestens 0,9 der absoluten Schmelztemperatur liegt, während mindestens 1 h bis zu einer Dichte von mindestens 90 % des theoretischen Wertes fertiggesintert wird. Vorzugsweise wird das Werkstück zusätzlich einem behälterlosen heiss-isostatischen Pressen zur Erreichung einer Dichte von 98 bis 100 % des theoretischen Wertes unterworfen.

In einer besonderen Ausbildung des Verfahrens wird der Vorsinterprozess unter Vakuum oder unter Argonatmosphäre bei reduziertem Druck durchgeführt.

In einer anderen Ausbildung des Verfahrens wird der Vorsinterprozess unter N₂- oder N₂/H₂-Atmosphäre durchgeführt.

Vorteilhafterweise wird das Verfahren durchgeführt, indem als Pulver ein Stahlpulver eines 12 %igen Cr-Stahles mit weiteren geringen Zusätzen an Mo und V mit einer Partikelgrösse von höchstens 50 µm verwendet, im Bereich von 900 bis 1100 °C während 1/2 h bis 1 h vorgesintert und im Bereich von 1330 bis 1430 °C während 1 h bis 4 h fertiggesintert wird.

## Patentansprüche

1. Verfahren zur Herstellung eines Werkstücks aus einem pulverförmigen Werkstoff, bei dem das Pulver bei einer Temperatur, welche mindestens das 0,65-fache der absoluten Schmelztemperatur des Werkstoffs beträgt, während mindestens 1/2 Stunde vorgesintert wird zu einem Formkörper, in dem die einzelnen Pulverpartikel lediglich an ihren Berührungspunkten durch Halsbildung ohne nennenswerte Schwindung miteinander verbunden sind, und bei dem der auf diese Weise vorgesinterte Formkörper in freitragendem Zustand bei einer Temperatur, welche mindestens das 0,9-fache der absoluten Schmelztemperatur des Werkstoffs beträgt, während mindestens 1 Stunde bis zu einer Dichte von mindestens 90 % des theoretischen Wertes des Werkstoffes fertiggesintert wird, dadurch gekennzeichnet, dass das Pulver trocken und frei von Binder in eine Form gefüllt wird, dass das in die Form gefüllte, binderfreie Pulver vor dem Vorsintern mechanisch durch Klopfen, Rütteln oder Vibrieren vorverdichtet wird, und dass das Vorsintern höchstens bis zu einer Stunde bei einer Temperatur ausgeführt wird, welche höchstens das 0,85-fache der absoluten Schmelztemperatur des Werkstoffs beträgt.

2. Verfahren nach Anspruch 1, dadurch gekennzeichnet, dass als Pulver ein Stahlpulver eines 12 %igen Cr-Stahles mit weiteren geringen Zusätzen an Mo und V mit einer Partikelgrösse von höchstens 50 µm verwendet, im Bereich von 900 bis 1100°C während 1/2 bis 1 Stunden vorgesintert und im Bereich von 1330 bis 1430°C während 1 bis 4 Stunden fertiggesintert wird.

## Claims

1. Process for producing a workpiece from a pulverulent material, in which the powder is presintered for at least ½ hour at a temperature, which is at least 0.65 times the absolute melting temperature of the material, to give a moulding in which the individual powder particles are mutually joined only at their contact points by knitting without significant shrinkage, and in which the moulding presintered in this way is finish-sintered in the freely self-supporting state at a temperature, which is at least 0.9 times the absolute melting temperature of the material, for at least 1 hour up to a density of at least 90 % of the theoretical value of the material, characterized in that the powder is filled dry and free of binder into a mould, that the binder-free powder filled into the mould is, before the presintering, mechanically precompacted by tapping, jolting or vibration, and that the presintering is carried out for at most up to one hour at a temperature which is at most 0.85 times the absolute melting temperature of the material.

2. Process according to Claim 1, characterized in that a steel powder of a 12 % Cr steel with further small additions of Mo and V and of a particle size of at most 50 µm is used as the powder, presintered for ½ to 1 hour in the range from 900 to 1100°C and finish-sintered for 1 to 4 hours in the range from 1330 to 1430°C.

## Revendications

1. Procédé de fabrication d'une pièce faite d'un matériau poudreux, lors duquel la poudre est préfrittée pendant au moins 1/2 heure à une température, qui est au moins 0,65 fois la température de fusion absolue du matériau, en un corps formé, dans lequel les particules de poudre individuelles sont reliées entre elles simplement à leurs points de contact par la formation de ponts sans retrait substantiel, et lors duquel le corps formé préfritté de cette manière à l'état non soutenu est soumis à un frittage final à une température, qui est au moins 0,9 fois la température de fusion absolue du matériau, pendant au moins 1 heure jusqu'à une densité d'au moins 90 % de la valeur théorique du matériau, caractérisé en ce que la poudre est remplie sèche et exempte de liant dans une forme, que la poudre exempte de liant, remplie dans la forme est pré-densifiée avant le préfrittage mécaniquement par tapement, par secousses ou par vibrations, et que le préfrittage est effectué au plus jusqu'à un heure à une température, qui est au plus 0,85 fois la température de fusion absolue du matériau.

2. Procédé selon la revendication 1, caractérisé en ce que l'on utilise, en tant que poudre, une poudre d'acier d'un acier au chrome à raison de 12 % avec des additifs faibles supplémentaires de Mo et de V, ayant une grosseur de particules d'au plus 50 microns, que l'on préfritte la poudre dans le domaine de 900 à 1100°C pendant une durée de 1/2 à 1 heure et que l'on procède à son frittage final dans le domaine de 1330 à 1430°C pendant une durée de 1 à 4 heures.
